Europäisches Patentamt

European Patent Office

Office européen des brevets

(19)

(11) Publication number: **0 131 173**
**B1**

(12) **EUROPEAN PATENT SPECIFICATION**

(45) Date of publication of patent specification: 24.06.87

(51) Int. Cl.⁴: **C 25 B 1/10, C 25 B 9/00**

(21) Application number: **84106914.9**

(22) Date of filing: **14.07.81**

(60) Publication number of the earlier application in accordance with Art. 76 EPC: **0 045 583**

(54) **Electrolysis apparatus.**

(30) Priority: **31.07.80 GB 8025021**

(43) Date of publication of application:
**16.01.85 Bulletin 85/03**

(45) Publication of the grant of the patent:
**24.06.87 Bulletin 87/26**

(84) Designated Contracting States:
**AT BE CH DE FR GB IT LI NL SE**

(56) References cited:
**DE-A-2 933 652**

(73) Proprietor: **Spirig, Ernst**
**P.O.Box 160 Speerstrasse 14**
**CH-8640 Rapperswil (CH)**

(72) Inventor: **Spirig, Ernst**
**P.O.Box 160 Speerstrasse 14**
**CH-8640 Rapperswil (CH)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

This invention relates to an electrolysis apparatus for electrolysing water to produce oxygen and hydrogen at separate outlets.

An electrolysis apparatus for electrolysing water is known from U.K. Patent Applicatio No. 2028372A. Such an apparatus comprises a plurality of spaced electrode plates defining a cell between each pair of adjacent plates, a gas impervious diaphragm is disposed between each pair of adjacent plates to divide the respective cell into oxygen- and hydrogen-generating portions, and ducts for carrying the generated oxygen and hydrogen from the cells and to the respective outlets and ducts for carrying fresh electrolyte to the cells.

The present invention is characterised in that a single first substantially straight duct extends through the cells from an electrolyte inlet to an oxygen outlet of the apparatus to connect the oxygen-generating portions of the cells together and to said inlet and outlet, and a single second substantially straight duct extends through the cells from an electrolyte inlet to a hydrogen outlet of the apparatus to connect the hydrogen-generating portions of the cells together and to said inlet and outlet.

An embodiment of this invention will now be described, by way of example only, with reference to the accompanying drawings, in which:

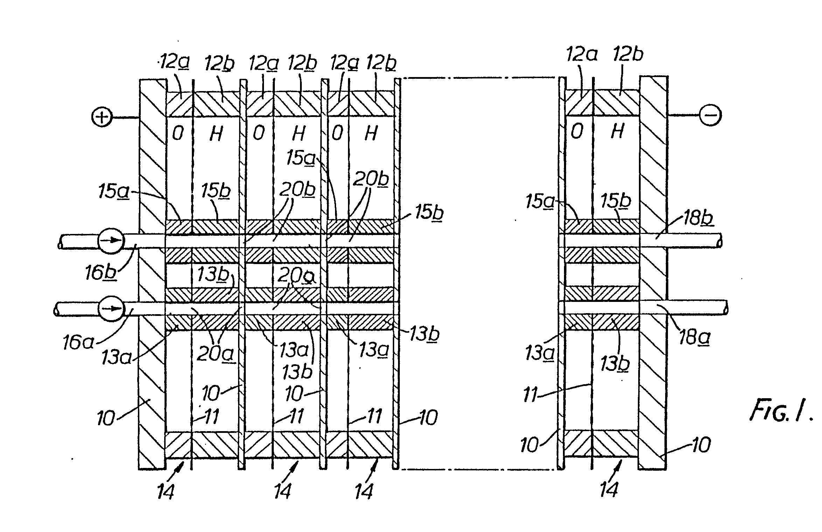

Figure 1 is a longitudinal section, on the line I—I of Figure 2, through an embodiment of electrolysis apparatus for generating oxygen and hydrogen at separate outlets.

Figure 2 is a cross-section through a gas generating cell of the apparatus of Figure 1;

Figure 2a is a cross-section through a special spacer of the apparatus of Figures 1 and 2; and

Figure 3 is a cross-section through a cooling cell of the apparatus of Figures 1 and 2.

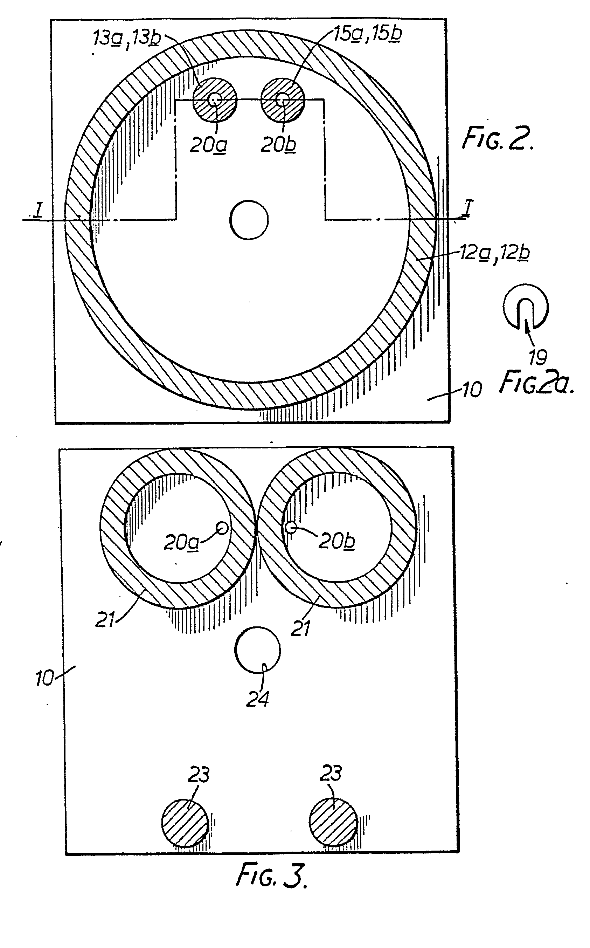

Referring to the drawings, there is shown an apparatus for electrolysing water to produce hydrogen and oxygen at separate outlets. The apparatus comprises a plurality of parallel metal electrode plates 10 defining gas generating cells 14 (and also some cooling cells as will be described in relation to Figure 3). Between each pair of adjacent plates in the gas generating cells, a diaphragm 11 is provided and is spaced from the respective plates by closed-loop spacers 12a, 12b. Thus, each gas generating cell 14, formed between a respective pair of adjacent plates, is divided into oxygen and hydrogen-generating sections by the diaphragm 11. The outermost or end electrode plates are thicker and are connected respectively to the positive and negative poles of the d.c. electricity source. Figure 2 shows square electrode plates and circular spacers, but other shapes may be envisaged.

The outermost electrode plate for connection to the positive pole is provided with inlets 16a, 16b for electrolyte, and the opposite outermost electrode plate is provided with outlets 18a, 18b respectively supplying hydrogen and oxygen. The intermediate electrode plates and diaphragms are each provided with a pair of apertures 20a, 20b at the same horizontal level near the top of the cells. The inlet 16a and outlet 18a are aligned with the apertures 20a, whilst the inlet 16b and outlet 18b are aligned with the apertures 20b. Moreover, a first series of tubular spacers 13a, 13b is provided in alignment with apertures 20a and a second series of tubular spacers 15a, 15b is provided in alignment with apertures 20b.

The arrangement is such that, in each gas generating cell, the diaphragm 11 is supported on opposite sides, around its aperture 20a, by spacers 13a, 13b spacing it from its respective electrode plates in the oxygen and hydrogen sections. Likewise, the diaphragm 11 is supported on its opposite sides, around its aperture 20b, by spacers 15a, 15b spacing it from its respective electrode plates in the oxygen and hydrogen sections. The tubular spacers 13b and 15a are each formed with a longitudinal slot 19 as shown in Figure 2a. Accordingly, inlet 16a and hydrogen outlet 18a communicate only with the hydrogen sections of the cells, the communication being effected through the tubular spacers 13a, 13b and the slots 19 in spacers 13b. Similarly, inlet 16b and oxygen outlet 18b communicate only with the oxygen sections of the cells, the communication being through the tubular spacers 15a, 15b and the slots 19 in the spacers 15a.

Cooling cells may be provided: the construction of such a cooling cell is illustrated in Figure 3, and differs from a gas generating cell in that the diaphragm 11 and the spacers 12a, 12b are dispensed with: instead, two spacers 21 (for example circular) are provided between the two electrode plates of the cell, respectively encircling the apertures 20a, 20b and defining hydrogen and oxygen cooling cell sections, and further spacers 23 are provided near the bottom to retain the stability of the structure. The outermost electrode plates of the cooling cell or cells are electrically short circuited so that the cells are inactive and instead effect cooling.

The stack of electrode plates and spacers are clamped together, for example by a central bolt (not shown) inserted through apertures 24 in the plates (Figure 3).

In operation of the apparatus, electrolyte is fed through inlets 16a and 16b into the hydrogen and oxygen sections of the first cell, and from this first cell it proceeds to the respective hydrogen and oxygen sections of the other cells in succession. Oxygen is generated at the positive plate of each cell and hydrogen is generated at the negative plate of each cell: the oxygen and hydrogen flow through the cells in succession to the respective oxygen and hydrogen outlets 18b, 18a. The diaphragms 11 prevent the flow of gas from one gas section to the other within the individual cells, but permit electrical current flow. Preferably, the hydrogen section of each cell is twice the volume of the oxygen section (for example by a difference in width of the sections, as shown), to take account of the fact that twice as much hydrogen as oxygen is generated, and tending to equalise the pressures on the opposite sides of the diaphragm.

The electrolyte is preferably fed to the inlets 16a, 16b through one-way valves to prevent the back-flow of oxygen and hydrogen. Preferably a differential pressure sensor is coupled to the outlets 18a, 18b, controlling electrical valves causing the venting of one gas volume should the other gas volume drop in pressure (for example owing to consumption by the user), again in order to reduce the difference in the pressures on opposite sides of each diaphragm.

The apparatus shown differs from prior art apparatus, also arranged to produce oxygen and hydrogen at separate outlets, by the features (amongst others) that it is not necessary to provide two connections to the exterior for each cell section (one for electrolyte and one for the generated gas), and that the evolved gases and their associated electrolytes each flow in a single channel straight through the apparatus.

### Claims

1. An electrolysis apparatus for electrolysing water to produce oxygen and hydrogen at separate outlets, comprising a plurality of spaced electrode plates defining a cell between each pair of adjacent plates, a gas impervious diaphragm (11) is disposed between each pair of adjacent plates (10) to divide the respective cell (14) into oxygen- and hydrogen-generating portions (O, H), and ducts for carrying the generated oxygen and hydrogen from the cells and to the respective outlets and ducts for carrying fresh electrolyte to the cells, characterised in that a single first substantially straight duct extends through the cells from an electrolyte inlet (16b) to an oxygen outlet (18b) of the apparatus to connect the oxygen-generating portions of the cells together and to said inlet and outlet, and a single second substantially straight duct extends through the cells from an electrolyte inlet (16a) to a hydrogen outlet (18a) of the apparatus to connect the hydrogen-generating portions of the cells together and to said inlet and outlet.

2. An apparatus as claimed in claim 1, characterised in that each gas generating cell comprises a first closed-loop spacer (12a) disposed between one electrode plate and the diaphragm (11) and a second closed-loop spacer (12b) disposed between the other electrode plate of the cell and the diaphragm, the electrode plates diaphragm and spacers being clamped together.

3. An apparatus as claimed in either claim 1 or claim 2, characterised in that each of the substantially straight hydrogen and oxygen ducts comprises aligned apertures through the electrode plates and diaphragms of the successive gas generating cells with a spacer (15a or 15b) in each of the oxygen- and hydrogen-generating portions disposed between the diaphragm and the respective electrode plate and formed with an aperture for the flow of the respective gas, some of the spacers affording communication between the oxygen and hydrogen ducts and the respective portions of the gas generating cells, and some others of the spacers sealing off the oxygen and hydrogen ducts from opposite portions of the cells.

4. An apparatus as claimed in any preceding claim, characterised by a differential pressure sensor coupled to the two gas outlets and controlling venting of one gas volume should it exceed a threshold pressure in excess of the other gas volume.

### Revendications

1. Un appareil d'électrolyse pour électrolyser de l'eau afin de produire de l'oxygène et de l'hydrogène à des sorties séparées, comportant une pluralité de plaques électrodes espacées qui définissent une cellule entre chaque paire de plaques adjacentes, une membrane (11) imperméable aux gaz placée entre chaque paire de plaques adjacentes (10) pour diviser la cellule respective (14) en sections (O, H) productrices d'oxygène et d'hydrogène, et des conduits pour transporter l'oxygène et l'hydrogène produits à partir des cellules et vers les sorties respectives, et des conduits pour transporter de l'électrolyte frais vers les cellules, caractérisé en ce qu'un premier conduit unique et sensiblement rectiligne s'étend au travers des cellules à partir d'une première entrée d'électrolyte (16b) vers une sortie d'oxygène (18b) de l'appareil afin de relier les sections productrices d'oxygène des cellules les unes aux autres et audites entrée et sortie, et en ce qu'un deuxième conduit unique sensiblement rectiligne s'étend au travers des cellules à partir d'une entrée d'électrolyte (16a) vers une sortie d'hydrogène (18a) de l'appareil afin de relier les sections productrices d'hydrogène des cellules les unes aux autres et auxdites entrée et sortie.

2. Un appareil selon la revendication 1, caractérisé en ce que chaque cellule productrice de gaz comporte une première pièce d'écartement en boucle fermé (12a) placée entre une plaque d'électrode et la membrane (11) et une deuxième pièce d'écartement en boucle fermée (12b) placée entre l'autre plaque d'électrode de la cellule et la membrane, les plaques d'électrode, la membrane et les pièces d'écartement étant serrées les unes contres les autres.

3. Un appareil selon la revendication 1 ou la revendication 2, caractérisé en ce que chacun des conduits sensiblement rectilignes d'hydrogène et d'oxygène comporte des orifices alignés qui traversent les plaques d'électrode et les membranes des cellules productrices de gaz successives, une pièce d'écartement (15a ou 15b) dans chacune des sections productrices d'oxygène et d'hydrogène étant placée entre la membrance et la plaque d'électrode respective et étant façonnée avec un orifice pour l'écoulement du gaz respectif, certaines pièces d'écartement permettant une communication entre les conduits d'oxygène et d'hydrogène et les sections respectives des cellules productrices de gaz, et d'autres pièces d'é-

cartement séparant hermètiquement les conduits d'oxygène et d'hydrogène des sections opposées des cellules.

4. Un appareil selon l'une quelconque des revendications précédentes, caractérisé par un détecteur de pression différentielle couplé aux deux sorties de gaz et contrôlant la décharge de l'un des volumes de gaz s'il dépasse une pression seuil en excédant de celle de l'autre volume de gaz.

## Patentansprüche

1. Elektrolysegerät zum Elektrolysieren von Wasser, um Sauerstoff und Wasserstoff an getrennten Auslässen zu erzeugen, mit einer Vielzahl beabstandeter, eine Zelle zwischen jedem Paar benachbarter Platten definierender Elektrodenplatten, wobei eine gasundurchlässige Membrane (11) zwischen jedem Paar benachbarter Platten (10) eingeordnet ist, um die entsprechende Zelle (14) un Sauerstoff- und Wasserstofferzeugender Teile (O, H) einzuteilen, und Kanälen, um den erzeugten Sauerstoff und Wasserstoff aus den Zellen heraus und zu den entsprechenden Auslässen zu führen und Kanälen, um frischen Elektrolyt den Zellen zuzuführen, dadurch gekennzeichnet, dass ein einzelner erster, im wesentlichen gerader Kanal sich von einem Elektrolyteinlass (16b) durch die Zellen hindurch zu einem Sauerstoffauslass (18b) des Gerätes erstreckt, um die sauerstofferzeugenden Teile der Zellen miteinander und mit dem besagten Einlass und Auslass zu verbinden, und ein einzelner zweiter, im wesentlichen geradliniger Kanal sich von einem Elektrolyteinlass (16a) durch die Zellen hindurch zu einem Wasserstoffauslass (18a) des Gerätes erstreckt, um die wasserstofferzeugenauslass (18a) des Gerätes erstreckt, um die wasden Teile der Zellen miteinander und mit dem besagten Einlass und Auslass zu verbinden.

2. Gerät nach Anspruch 1, dadurch gekennzeichnet, dass jede gaserzeugende Zelle einen ersten, zwischen einer Elektrodenplatte und der Membrane (11) angeordneten Abstandhalter (12a) im geschlossenen Kreis und einen zweiten, zwischen der anderen Elektrodenplatte der Zelle und der Membrane angeordneten Abstandhalter (12b) im geschlossenen Kreis enthält, wobei die Elektrodenplatten, Membrane und Abstandhalter zusammengeklemmt sind.

3. Gerät nach Anspruch 1 oder Anspruch 2, dadurch gekennzeichnet, dass jeder der im wesentlichen geradlinigen Wasserstoff- und Sauerstoffkanäle fluchtende Öffnungen durch die Elektrodenplatten und Membranen der aufeinanderfolgenden gaserzeugenden Zellen mit einem zwischen der Membrane und der entsprechenden Elektrodenplatte in jedem der sauerstoff- und wasserstofferzeugenden Teile angeordneten und mit einer Öffnung für den Fluss des entsprechenden Gases gebildeten Abstandhalter (15a oder 15b) umfasst, wobei einige der Abstandhalter die Verbindung zwischen den Sauerstoff- und Wasserstoffkanälen und den entsprechenden Teilen der gaserzeugenden Zellen herstellen und einige andere der Abstandhalter die Sauerstoff- und Wasserstoffkanäle von entgegengesetzten Teilen der Zelle absperren.

4. Gerät nach einem beliebigen vorhergehenden Anspruch, gekennzeichnet durch einen mit den beiden Gasauslässen verkoppelten Differenzdruckfühler, der das Entlüften eines Gasvolumens steuert, wenn es einen das andere Gasvolumen überschreitenden Schwellenwertdruck überschreitet.

FIG. 1.

0 131 173

FIG. 2.

FIG.2a.

FIG. 3.